# EUROPEAN PATENT SPECIFICATION

(11) **EP 3 846 607 B1**
(45) Date of publication and mention of the grant of the patent: **06.11.2024**
(21) Application number: 19779589.1
(22) Date of filing: 30.08.2019
(51) Int. Cl.: A01C 7/04

(54) **IMPROVED SOWING DISK**
VERBESSERTE SÄSCHEIBE
DISQUE DE SEMIS AMÉLIORÉ

(30) Priority: 05.09.2018 IT 201800008373
(43) Date of publication of application: 14.07.2021
(73) Proprietor: MATERMACC SRL, 39100 Bolzano (BZ) (IT)
(72) Inventor: BRAGATTO, Enrico, 30021 Caorle (VE) (IT); DRECOGNA, Andrea, 33040 Premariacco (UD) (IT)
(74) Representative: Petraz, Gilberto Luigi
(86) International application number: PCT/IB2019/057310
(87) International publication number: WO 2020/049426

(56) References cited:
- DE-A1- 102013 111 356
- DE-A1- 2 217 513
- US-A- 3 999 690

## Description

### TECHNICAL FIELD

The present invention relates to a granular material distributor device for agricultural machines, in particular for distributing seeds on the soil.

The present invention has been developed with particular reference to an improved sowing disc.

### PRIOR ART

In automated agriculture, the use of towed or self-propelled agricultural machinery, for distributing material such as, for example, fertilizer or seeds, is known. Precision seeders are known which comprise a plurality of sowing assemblies supported by a frame that rests on the ground by means of at least one wheel and is connected to a tractor for towing the seeder itself.

A sowing assembly comprises at least one distributor device provided with a chamber that has an inlet and an outlet for the seeds to be distributed and that is placed in fluid connection with a fan, mechanically connected to a power take-off of the tractor, for generating a depression inside the chamber itself.

Inside the chamber of the distributor device a distributor element is housed, e.g. a sowing disc, adapted to receive the material due to the effect of the pressure difference and to transport it from the inlet to the outlet of the chamber until it is released into a conveyor conduit that takes it towards the soil onto which it is to be deposited.

Inside the chamber of the distributor device there is also a seed selector element, which is configured to detach from the distributor element an excessive quantity of seeds which, due to the effect of the pressure difference, can adhere to the distributor element and be taken therewith towards the outlet. Such sowing discs, according to the preamble of claim 1, are known from US 3 999 690 A and from DE 10 2013 111356 A1.

Several tests performed by the Applicant have highlighted the need to improve as much as possible the correct distribution of seeds exiting from the distributor device.

Therefore the need has arisen to improve the efficiency of a sowing disc so that it is able to always dispense just one seed at a time regardless of its rotation speed or of the type of seed, the batch of seeds and the environmental parameter values, e.g. humidity and air temperature.

In virtue of the above, an object of the present invention is that of providing a solution to such requirement.

This and other objects are reached through the embodiment of the invention comprising the technical features defined in the main claim. The dependent claims outline preferred and/or particularly advantageous aspects of the invention.

### DISCLOSURE OF THE INVENTION

An aspect of the solution according to the present invention provides an improved sowing disc for a granular material distributor device for agricultural machines, comprising:
- a disc comprising a series of through holes arranged circumferentially on the peripheral portion thereof, and
- a plurality of recessed pockets distributed circumferentially in proximity to the series of through holes, and particularly adapted to agitate the seeds contained inside the distributor device and to direct them towards the through holes,
wherein each recessed pocket is delimited by at least two side walls and a bottom wall inclined towards the outside of the improved sowing disc.

Thanks to such solution, it is possible to agitate the seed even at high sowing disc rotation speeds without compromising the correct selection of the seed.

The sowing disc according to the invention also comprises:
- a counter-disc fixed concentric to the disc and having a smaller diameter than the diameter of the disc, such that the holes of the disc project beyond a perimeter edge of the counter-disc,
- said counter-disc comprising said plurality of recessed pockets, wherein the counter-disc comprises a plurality of agitation crests distributed radially and extending from a central portion of the counter-disc towards the outside of the disc, each of said agitation crests defining the side walls of two contiguous recessed pockets.

Thanks to such solution, an improved sowing disc can be obtained that is compact, easy to manufacture and simple to maintain, which improves the sowing quality of the granular distributor device for agricultural machines.

A further aspect of the present invention provides that said inclined surfaces are depressions provided on the counter-disc.

Thanks to such solution between the counter-disc and a possible drawing member of the improved sowing disc no further surfaces are interposed.

Yet another aspect of the present invention provides that an outer end portion of the inclined surface is convex, an outer end of the crests projecting radially with respect to the central zone of the outer end portion of the inclined surface. Thanks to such solution there is no stagnation zone downstream of each crest, thus the seed can fall into the seed suction zone inside the chamber of the distributor device, without being launched.

A further aspect of the solution according to the present invention provides a granular material distributor device for agricultural machines that comprises an improved sowing disc having the technical features described above.

Yet another aspect of the solution according to the present invention provides an agricultural machine for the distribution of seeds on the soil of the type comprising a granular material distributor device, which comprises an improved sowing disc having the technical features described above.

### BRIEF DESCRIPTION OF THE DRAWINGS

Further features and advantages of the present invention shall become clearer from the following description, provided by way of example with reference to the appended figures wherein:
- Figure 1 is an exploded perspective view of a distributor device for a sowing assembly;

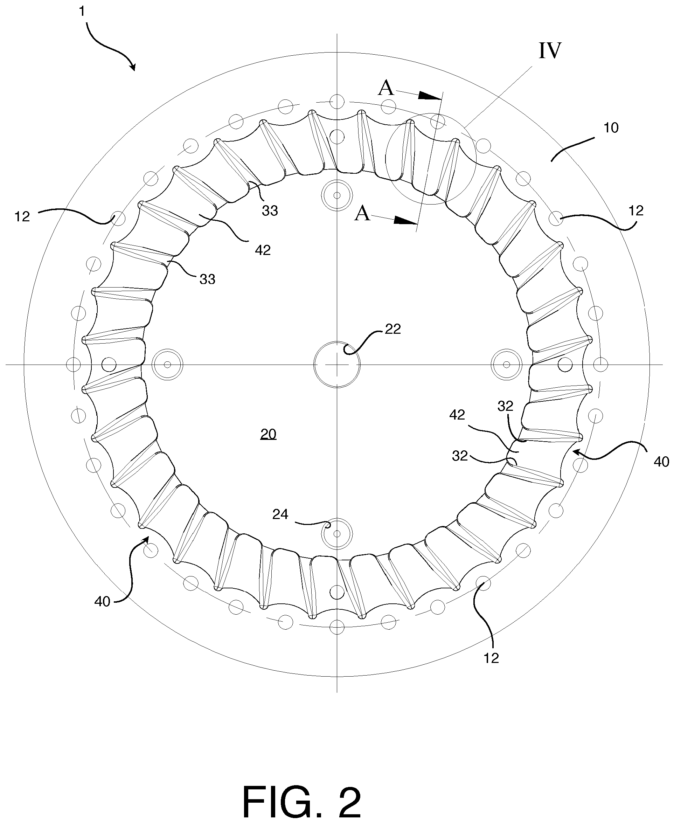

- Figure 2 is a view from above of an improved sowing disc of the present invention;
- Figure 3 is a view according to section A-A of Figure 2 of an agitation pocket;
- Figure 4 is a detailed view of one of the embodiments of an agitation pocket according to the present invention;
- Figure 5 is a detailed view of a further embodiment of an agitation pocket according to the present invention;
- Figure 6 is a partial side view of the improved disc illustrated in the previous figures; and
- Figure 7 is a perspective view of a further embodiment of the present invention.

### DESCRIPTION OF THE DRAWINGS

The present embodiment example refers to an improved sowing disc 1 for a distributor device 100 of a sowing assembly of a precision seeder.

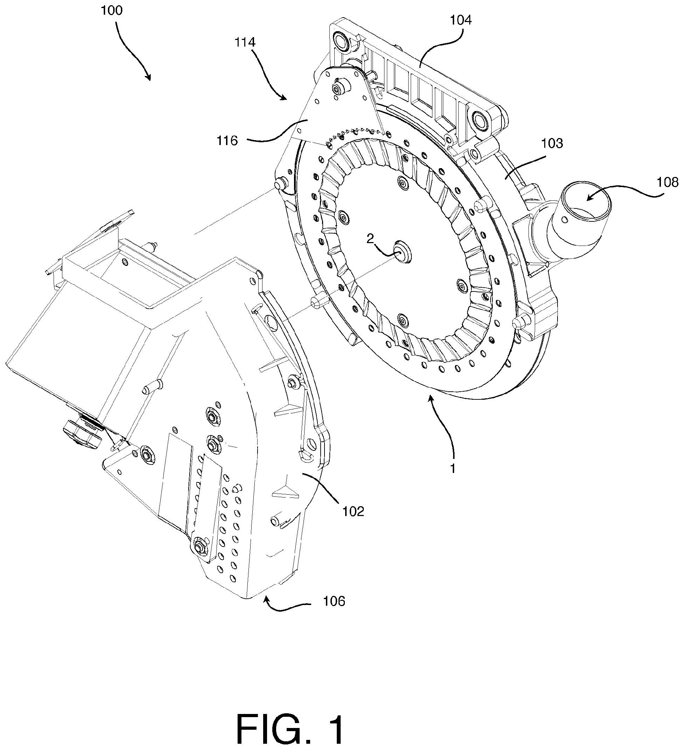

With particular reference to Figure 1, the distributor device 100 comprises a case that is internally hollow and defines a chamber inside it. The case is defined by a pair of half-shells 102, 103 configured to be joined together for defining the chamber. Each of the two half-shells 102, 103 is defined by a substantially concave body and is adapted to be arranged with the concavity facing towards the other half-shell. The half-shell 103 comprises a perimeter flange 104 adapted to be coupled and fixed through appropriate fixing means, known in themselves, to a perimeter flange of the other half-shell 102.

The half-shell 102 further comprises a lower projection adapted to define, in combination with a homologous part of the other half-shell 103, an outlet 106 for granular material, i.e. seeds, from the chamber towards the soil.

The half-shell 103 further comprises an opening 108, for example realised in a perimeter portion of the half-shell 103, to which an assembly is connected for varying the pressure value inside the chamber.

The improved sowing disc 1 according to the present invention comprises a disc 10, preferably but not necessarily made of metal or plastic material, which is housed inside the chamber of the distributor device 100 and is particularly adapted for picking material, e.g. seeds, from an inlet of the chamber and for transporting it towards the outlet 106 of the chamber of the distributor device 100. The disc 10 is rotatably associated with the chamber and in particular is coaxially connected to a rotation shaft 2, connected in turn to transmission means (not illustrated).

The disc 10 comprises a central hole particularly adapted to house an end of the rotation shaft 2, and a series of through holes 12 arranged circumferentially on the peripheral portion of the disc itself 10. In particular the through holes 12 are arranged equidistant from each other and proximal to the edge of the disc 10, and have a smaller diameter than the minimum diameter of the material to be distributed, for example seeds.

The distributor device may further comprise a selector assembly 114 also housed in the chamber and adapted to detach from the disc 10, a quantity of granular material, i.e. a number of seeds, transported by the disc 10 that exceeds a predetermined threshold quantity. In particular the selector assembly 114 is configured to detach from the disc 10 the excess seeds with respect to the single seed that each hole 12 is configured to bring to the outlet. The selector assembly 114 comprises a seed selector element 116, shaped like a substantially flat body, e.g. an elongated plate. The selector element 116 is positioned in proximity to a radial end of the disc 10 and has a portion overlapping with a radial peripheral portion of the disc 10 facing the chamber and external to the holes 12. The selector element 114 is hinged, for example at an end thereof, to the half-shell 103.

The distributor device can further comprise a drawing disc (not illustrated) integral in rotation with the rotation shaft 2 and comprising, for example, a plurality of engagement elements adapted to engage the improved sowing disc 1 and to draw it in rotation together with the drawing disc.

The improved sowing disc 1 further comprises a second disc, or counter-disc 20, made of metal or plastic material, fixed coaxial and concentric to the surface of the disc 10. According to this embodiment, the counter-disc 20 comprises a central hole 22 particularly adapted for housing one end of the rotation shaft 2 to which the disc 10 is connected, and a plurality of through holes 24 to allow the passage of fixing elements, e.g. screws, particularly adapted to fix the counter-disc 20 to the disc 10.

The counter-disc 20 has a smaller diameter than the diameter of the disc 10, so that the perimeter edge of the counter-disc 20 does not overlap with the holes 12 of the disc 10, and the holes 12 project beyond the perimeter edge of the counter-disc 20.

The counter-disc 20 comprises a perimeter peripheral portion on which a plurality of recessed pockets 40 are fashioned distributed circumferentially in proximity to the series of through holes 12. Each recessed pocket 40 is delimited by at least two side walls 32 and a bottom wall 42.

According to a particularly advantageous feature of the present invention, the bottom wall 42 is inclined towards the outside of the improved disc 1, so as to be particularly adapted to promote the movement of material, e.g. a seed, towards the holes 12 of the disc 10.

According to the embodiments illustrated in the figures, the counter-disc 20 comprises a plurality of agitation crests 33, distributed radially and that extend from a central portion of the counter-disc 20 towards the outside of the improved disc 1. Each of said agitation crests 33 defines the side walls 32 of two contiguous recessed pockets 40.

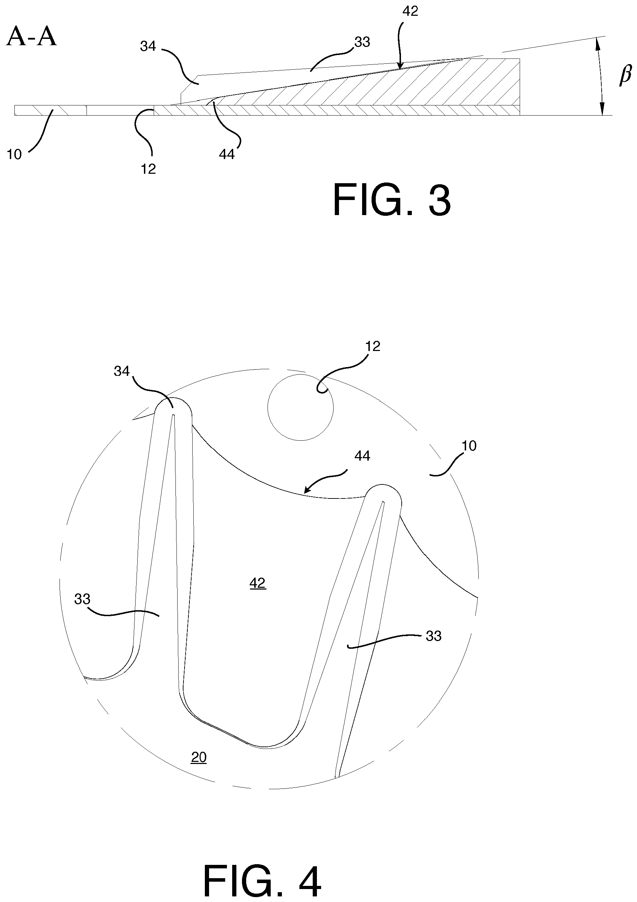

As is more clearly illustrated in Figure 3, the inclined bottom wall 42 has a predetermined angle of inclination *β* with respect to the surface of the disc 10, such that the inner portion of the inclined surface 42 has a lower sectional height with respect to the height of an outer end portion 44 of the inclined surface 42.

The crests 33 can also be realised with an inclined upper surface, so that the outer end 34 thereof has a lower sectional height with respect to the height of the inner portion thereof, however greater than the height of the outer end portion 44 of the inclined surface 42.

According to a further feature of the present invention, the inclined surfaces 42 can be fashioned as radial depressions of the counter-disc 20, so that between the counter-disc 20 and a possible drawing member of the improved sowing disc 1 no further surfaces are interposed.

According to a particularly advantageous feature of the present invention, and as will be better illustrated in figure 4, each inclined surface 42 connects two pairs of contiguous crests 33 in proximity to the outer end 34 of each pair of agitation crests 33. In an alternative embodiment, the extension of the outer end portion 34 of each agitation crest 33 not connected by the inclined surface 42 is smaller than the diameter of the hole 12 fashioned in the flat perimeter portion 10 of the improved disc 1.

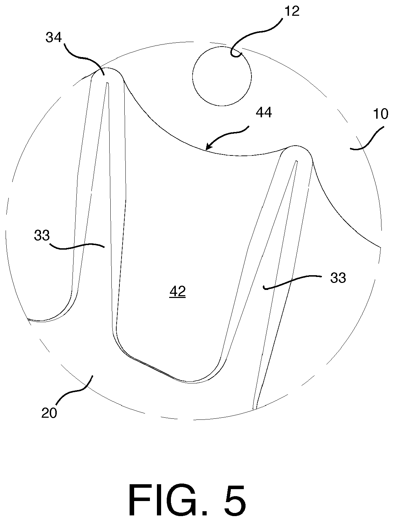

According to a further embodiment of the present invention, illustrated in Figure 5, each inclined surface 42 connects a pair of contiguous agitation crests 33 for the entire longitudinal extension of the agitation crests 33.

According to a further particularly advantageous feature of the present invention, an outer end portion 44 of the inclined surface 42 may be shaped, preferably convex.

This configuration allows the ends 34 of two contiguous crests 33 to be arranged at the sides of a through hole 12 of the disc 10, and the central zone of the outer end portion 44 of the inclined surface 42 at a through hole 12, preventing any stagnation zones forming downstream of each crest 33.

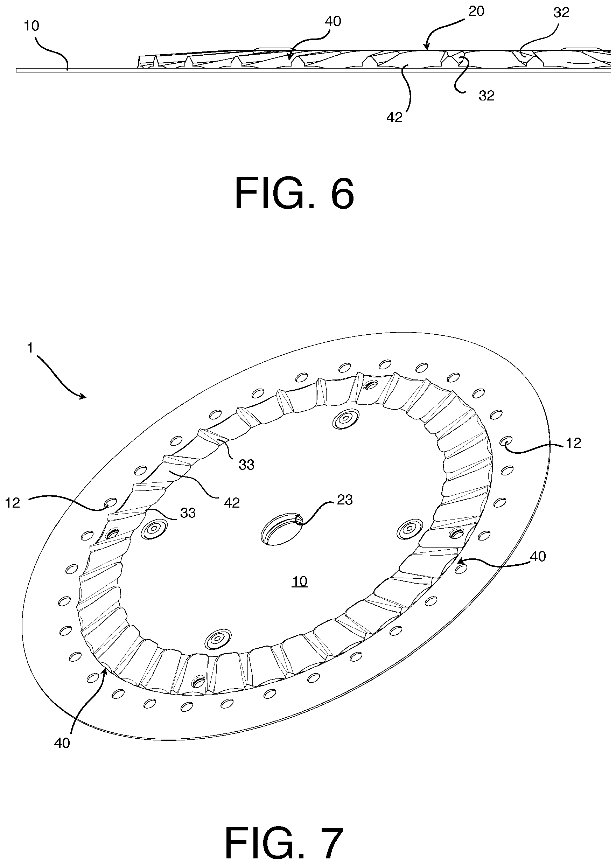

According to a further embodiment of the present invention, illustrated in figure 7, the improved sowing disc 1 comprises a disc 10, preferably but not necessarily made of plastic or metal material, which is housed inside the chamber of the distributor device 100 and is particularly adapted for picking material, e.g. seeds, from an inlet of the chamber and for transporting it towards the outlet 106 of the chamber of the distributor device 100. The disc 10 is rotatably associated with the chamber and in particular is coaxially connected to a rotation shaft 2, connected in turn to transmission means (not illustrated).

The disc 10 comprises a central hole 23 particularly adapted to house an end of the rotation shaft 2, and a series of through holes 12 arranged circumferentially on the peripheral portion of the disc itself 10. In particular the through holes 12 are arranged equidistant from each other and proximal to the edge of the disc 10, and have a smaller diameter than the minimum diameter of the material to be distributed, for example seeds.

The disc 10 further comprises a plurality of recessed pockets 40 fashioned on a perimeter peripheral portion of the disc 10. Each recessed pocket 40 is delimited by at least two side walls 32 and a bottom wall 42.

According to a particularly advantageous feature of the present invention, the bottom wall 42 is inclined towards the outside of the improved disc 1, so as to be particularly adapted to promote the movement of material, e.g. a seed, towards the holes 12 of the disc 10.

According to the embodiment illustrated in Figure 7, the side walls 32 of two contiguous recessed pockets 40 are formed by a crest, an agitation crest 33, elongated towards the outside of the improved disc 1.

According to a further feature of the present invention, the inclined surfaces 42 can be fashioned as radial depressions of the disc 10, so that between the disc 10 and a possible drawing member of the improved sowing disc 1 no further surfaces are interposed.

Naturally, all the technical features and embodiments of the recessed pockets 40 described herein are applicable both to recessed pockets 40 fashioned directly on the disc 10 and to recessed pockets 40 fashioned on the counter-disc 20 of the improved disc 1 of the present invention.

In use, the improved sowing disc 1 is placed in rotation inside the distributor device, and the recessed pockets 40 agitate the seeds coming from the inlet of the distributor device 100 and direct the seeds towards the through holes 12 of the disc 10 to promote their engagement with one of the holes 12.

All the details can be replaced with other technically-equivalent elements. Likewise, the materials used, and the contingent shapes and sizes, may be any according to the requirements but without thereby departing from the scope of protection of the following claims.

## Claims

1. Sowing disc (1) for a granular material distributor device for agricultural machines, comprising:
- a disc (10) comprising a series of through holes (12) arranged circumferentially on the peripheral portion thereof, and
- a plurality of recessed pockets (40) distributed circumferentially in proximity to the series of through holes (12), and particularly adapted to agitate the seeds contained inside the distributor device and to direct them towards the through holes (12), wherein each recessed pocket (40) is delimited by at least two side walls (32) and a bottom wall (42), said bottom wall (42) being inclined towards the outside of the sowing disc (1),
**characterised in that** it further comprises:
- a counter-disc (20) fixed concentric to the disc (10) and having a smaller diameter than the diameter of the disc (10), such that the holes (12) of the disc (10) project beyond a perimeter edge of the counter-disc (20),
- said counter-disc (20) comprising said plurality of recessed pockets (40), wherein the counter-disc (20) comprises a plurality of agitation crests (33) distributed radially and extending from a central portion of the counter-disc (20) towards the outside of the sowing disc (1), each of said agitation crests (33) defining the side walls (32) of two contiguous recessed pockets (40).

2. Sowing disc according to claim 1, **characterised in that** said bottom walls (42) are depressions fashioned on the counter-disc (20).

3. Sowing disc according to any one of the preceding claims, **characterised in that** in at least one recessed pocket (40) said bottom wall (42) connects said side walls (32) for the entire longitudinal extension of said side walls (32).

4. Sowing disc according to any one of the preceding claims, **characterised in that** an outer end portion (44) of the bottom wall (42) of at least one recessed pocket (40) is convex.

5. Sowing disc according to claim 1, **characterised in that** said bottom walls (42) are depressions fashioned on the disc (10).

6. Granular material distributor device for agricultural machines, **characterised in that** it comprises a sowing disc according to any one of claims 1 to 5.

7. Agricultural machine for distributing seeds on soil of the type comprising a granular material distributor device, **characterised in that** it comprises a sowing disc according to any one of claims 1 to 5.

## Patentansprüche

1. Sähscheibe (1) für eine Granularmaterialverteilungsvorrichtung für landwirtschaftliche Maschinen, die aufweist:
- eine Scheibe (10), die eine Reihe Durchgangslöcher (12) aufweist, die umlaufend an deren Umfangsabschnitt angeordnet sind, und
- eine Vielzahl vertiefter Taschen (40), die umlaufend in der Nähe zu der Reihe Durchgangslöcher (12) verteilt sind und zum Agitieren des Saatguts, das innerhalb der Verteilungsvorrichtung enthalten ist, und zum Richten desselben in Richtung der Durchgangslöcher (12) besonders angepasst sind, wobei jede vertiefte Tasche (40) durch mindestens zwei Seitenwände (32) und eine Bodenwand (42) begrenzt ist, wobei die Bodenwand (42) in Richtung der Außenseite der Sähscheibe (1) geneigt ist,
**dadurch gekennzeichnet, dass** sie ferner aufweist:
- eine Gegenscheibe (20), die konzentrisch zu der Scheibe (10) fixiert ist und einen kleineren Durchmesser als der Durchmesser der Scheibe (10) hat, sodass die Löcher (12) der Scheibe (10) über eine Umfangskante der Gegenscheibe (20) hinaus vorstehen,
- wobei die Gegenscheibe (20) die Vielzahl vertiefter Taschen (40) aufweist,
wobei die Gegenscheibe (20) eine Vielzahl Agitierkämme (33) aufweist, die radial verteilt sind und sich von einem Zentralabschnitt der Gegenscheibe (20) in Richtung der Außenseite der Sähscheibe (1) erstrecken, wobei jeder der Agitierkämme (33) die Seitenwände (32) von zwei angrenzenden vertieften Taschen (40) definiert.

2. Sähscheibe gemäß Anspruch 1, **dadurch gekennzeichnet, dass** die Bodenwände (42) an der Gegenscheibe (20) gestaltete Vertiefungen sind.

3. Sähscheibe gemäß einem der vorangehenden Ansprüche, **dadurch gekennzeichnet, dass** bei mindestens einer vertieften Tasche (40) die Bodenwand (42) die Seitenwände (32) über die gesamte Längserstreckung der Seitenwände (32) verbindet.

4. Sähscheibe gemäß einem der vorangehenden Ansprüche, **dadurch gekennzeichnet, dass** ein äußerer Endabschnitt (44) der Bodenwand (42) von mindestens einer vertieften Tasche (40) konvex ist.

5. Sähscheibe gemäß Anspruch 1, **dadurch gekennzeichnet, dass** die Bodenwände (42) an der Scheibe (10) gestaltete Vertiefungen sind.

6. Granularmaterialverteilungsvorrichtung für landwirtschaftliche Maschinen, **dadurch gekennzeichnet, dass** sie eine Sähscheibe gemäß einem der Ansprüche 1 bis 5 aufweist.

7. Landwirtschaftliche Maschine zum Verteilen von Saatgut auf Erdreich nach der Bauart, die eine Granularmaterialverteilungsvorrichtung umfasst, **dadurch gekennzeichnet, dass** sie eine Sähscheibe gemäß einem der Ansprüche 1 bis 5 aufweist.

## Revendications

1. Disque de semis (1) pour un dispositif de distribution de matériau granulaire pour machines agricoles, comprenant :
- un disque (10) comprenant une série de trous traversants (12) agencés de manière circonférentielle sur sa partie périphérique, et
- une pluralité de poches évidées (40) réparties de manière circonférentielle à proximité de la série de trous traversants (12), et particulièrement adaptées pour agiter les graines contenues à l'intérieur du dispositif de distribution et les diriger vers les trous traversants (12), dans lequel chaque poche évidée (40) est délimitée par au moins deux parois latérales (32) et une paroi inférieure (42), ladite paroi inférieure (42) étant inclinée vers l'extérieur du disque de semis (1),
**caractérisé en ce qu'**il comprend en outre :
- un contre-disque (20) fixé de manière concentrique au disque (10) et ayant un diamètre inférieur au diamètre du disque (10), de sorte que les trous (12) du disque (10) fassent saillie au-delà d'un bord périphérique du contre-disque (20),
- ledit contre-disque (20) comprenant ladite pluralité de poches évidées (40),
dans lequel le contre-disque (20) comprend une pluralité de crêtes d'agitation (33) réparties radialement et s'étendant d'une partie centrale du contre-disque (20) vers l'extérieur du disque de semis (1), chacune desdites crêtes d'agitation (33) définissant les parois latérales (32) de deux poches évidées contiguës (40).

2. Disque de semis selon la revendication 1, **caractérisé en ce que** lesdites parois inférieures (42) sont des dépressions façonnées sur le contre-disque (20).

3. Disque de semis selon l'une quelconque des revendications précédentes, **caractérisé en ce que** dans au moins une poche évidée (40), ladite paroi inférieure (42) relie lesdites parois latérales (32) pour toute l'extension longitudinale desdites parois latérales (32).

4. Disque de semis selon l'une quelconque des revendications précédentes, **caractérisé en ce qu'**une partie d'extrémité extérieure (44) de la paroi inférieure (42) d'au moins une poche évidée (40) est convexe.

5. Disque de semis selon la revendication 1, **caractérisé en ce que** lesdites parois inférieures (42) sont des dépressions façonnées sur le disque (10).

6. Dispositif de distribution de matériau granulaire pour machines agricoles, **caractérisé en ce qu'**il comprend un disque de semis selon l'une quelconque des revendications 1 à 5.

7. Machine agricole pour distribuer des graines sur un sol du type comprenant un dispositif de distribution de matériau granulaire, **caractérisée en ce qu'**elle comprend un disque de semis selon l'une quelconque des revendications 1 à 5.
